# EUROPEAN PATENT SPECIFICATION

(11) **EP 4 095 026 B1**
(45) Date of publication and mention of the grant of the patent: **03.07.2024**
(21) Application number: 21175528.5
(22) Date of filing: 24.05.2021
(51) Int. Cl.: B62K 27/00

(54) **BIKE TRAILER**
FAHRRADANHÄNGER
REMORQUE DE BICYCLETTE

(43) Date of publication of application: 30.11.2022
(60) Divisional application: 24173546.3
(73) Proprietor: Thule Sweden AB, 335 04 Hillerstorp (SE)
(72) Inventor: HAK, Wilbert, 56892 Skillingaryd (SE); PERSSON, Joakim, 56831 Skillingaryd (SE); PETERSSON, Maja, 33133 Värnamo (SE)
(74) Representative: Wallentin, Lars

(56) References cited:
- EP-A1- 1 690 782
- DE-U1-202012 004 462
- US-A1- 2019 256 121
- US-B2- 8 262 103

## Description

### TECHNICAL FIELD

The present disclosure relates to a bike trailer comprising an accommodation space for a passenger. More specifically, the present disclosure relates to a bike trailer comprising a seat structure being releasably connected to the bike trailer and being adapted to be transferred between a first position and a second position. The present disclosure furthermore relates to a bike trailer comprising a seat structure being configured for moving between an upright position and a reclined position.

### BACKGROUND OF THE INVENTION

US 8 262 103 B2 discloses the preamble of claim 1.

Bike trailers to which this disclosure pertains are used to transport one or two children pets or other loads to be transported. Bike trailers are often configured to a single purpose, such as transporting either one or two kids or for transporting goods. This may necessitate using different bike trailers for different purposes or that the stability and safety of the bike trailer is affected when using the bike trailer for another purpose than the specific intended purpose, such as when using the bike trailer for one child instead of two.

Bike trailers intended to be used for multiple purposes and with a seat structure having both an upright position and a reclined position may often be cumbersome and complicated to maneuver between for users.

In view of the above, there is a need for a bike trailer which is configured for multiple purposes and/or which is easy, stable and convenient to use for different purposes and seating positions.

### SUMMARY OF THE INVENTION

One or more of the above objects may be achieved with a bike trailer in accordance with claim 1. Further embodiments are set out in the dependent claims, in the following description and in the drawings.

According to a first aspect, the present disclosure relates to a bike trailer comprising a main frame. The main frame comprises a lower frame portion, a rear frame portion and two side frame portions provided on opposite lateral sides of the lower frame portion, the main frame defining an accommodation space for a passenger and/or load to be transported. The bike trailer has an extension in a longitudinal direction, in a transverse direction and in a height direction. The bike trailer comprises a seat structure forming a seating area for the passenger, the seat structure comprising a seat back and a seat bottom. The seat back is releasably connected to the bike trailer in a first position and in a second position, the first position providing a first lateral seating area for the passenger and the second position providing a centralized seating area for the passenger, as seen in the transverse direction.

Such configuration allows transfer of the seat back, such as the seat structure, between the first and second position and thereby allow alternating between a bike trailer having a first lateral seating area and a centralized seating area. The bike trailer may thus have the centralized seating area when the bike trailer is used for only one child, providing a stable and balanced configuration, and the first lateral seating area allowing a second child, a pet or a load to be transported on a second lateral seating area.

The bike trailer is a trailer adapted for coupling to a bike. The bike trailer may include a bike coupler, for example located on a front frame part of the lower frame portion. The bike coupler may be adapted to be coupled, such as stiffly coupled, to a frame of the bike, a front wheel or a rear wheel of the bike.

The main frame may frame the seat structure, as seen in the transverse direction and in the height direction. The rear frame portion comprises an upper cross bar and the upper cross bar and the two side frame portions may frame the seat structure, providing upper and side protection for the passenger, i.e. the child, seated in the bike trailer.

The rear frame portion comprises an upper cross bar having a central portion and first and second lateral portions provided on opposite sides of the central portion, as seen in the transverse direction. The seat back is releasably connected to the upper cross bar at an upper end section of the seat back. The seat back is configured for releasable connection to the upper cross bar in a first position and in a second position, the first position being arranged on the first lateral portion of the cross bar, thus providing the seat structure in the first lateral seating area for the passenger, and the second position being arranged on the central portion of the upper cross bar, thus providing the seat structure in the centralized seating area for the passenger. Such configuration provides an improved and easily accessible connection and allows transfer of the seat back, such as the seat structure, between the first and the second position.

The seat back and/or the upper cross bar may comprise a connecting member configured for releasable connection between the seat back and the upper cross bar and the connecting member may be transferable by sliding in or on the upper cross bar, such as in a track provided in the upper cross bar, between the first position and the second position. This enables convenient transfer of the seat back, such as the seat structure, between the first and second position. The seat back may comprise a seat back connecting member and the cross bar may comprise a cross bar connecting member, the seat back connecting member and the cross bar connecting member being mating connecting members.

The seat back and the seat bottom may be one integrated unit. The seat back and the seat bottom may be one integrated unit such that when the seat back is disconnected from the bike trailer, the seat back is also disconnected from the bike trailer together with the seat back. The seat back may optionally be hingedly connected to the seat back, such that the seat back may be provided in an upright position and in a reclined position. Such configuration implies that the entire seat structure, i.e. the seat back and the seat bottom, is transferred between the first and the second position.

The seat bottom may extend, as seen in the transverse direction, over the first lateral seating area and over the centralized seating area for the passenger and the seat back may be releasably connected to the seat bottom in the first position and in the second position. Such configuration allows moving only the seat back between the first and second position and thereby alternate between a bike trailer having a first lateral seating area and a centralized seating area.

The bike trailer may comprise a first and/or a second locking member and the first and/or second positions may be first and/or second locked positions, preventing movement of the seat back and/or seat structure in the transverse direction upon locking of the first and/or second locking member.

The lower frame portion may comprise a first and a second lower frame side section and a lower cross bar may extend between the first and the second lower frame side sections, the seat bottom being supported by the lower cross bar. This provides a stable configuration for the seat structure. A lower rear cross bar may additionally extend between the first and the second lower frame side sections, the seat bottom being supported also by the lower rear cross bar.

The seat structure may have a rigid base structure covering a back side of the seat back and the seat bottom respectively. The seat structure may for example have a rigid plastic base structure completely covering the back side of the seat back and the seat bottom. By back side is herein meant the side which is not intended to face the user sitting in the seat structure. A seat structure having a rigid base structure facilitates removal and repositioning of the seat structure.

The bike trailer may comprise a second seat structure forming a seating area for a second passenger. The second seat structure may comprise a seat back and a seat bottom, the seat back of the second seat structure being releasably connected to the bike trailer in a third position providing a second lateral seating area for the second passenger.

The second seat structure may comprise the features of the seat structure according to the first aspect.

The rear frame portion may comprise an upper cross bar extending between the two side frame portions. The seat back may be configured for moving between an upright position and a reclined position and the seat back may be releasably connected to the cross bar at an upper end section of the seat back via a reclining member. The reclining member may be transferable between a first configuration wherein the seat back is in the upright position and a second configuration wherein the seat back is in the reclined position, the upper end section of the seat back being provided with a greater distance from the cross bar in the second configuration than in the first configuration.

The reclining member may be an adjustable strap member, a rigid adjustable connector or a rod.

The reclining member and the upper end section of the seat back may comprise a respective mating coupling element, such as providing a snap fit connection, or a threaded connection, providing the releasable connection between the seat back and the cross bar.

The seat back may be hingedly connected to the seat bottom and the seat structure may be provided with a spring-biased member, such as a torsion spring, which biases the seat back towards the reclined position. This facilitates moving the seat back into the reclined position.

The lower frame portion may comprise a first and a second lower frame side sections and a lower cross bar may extend between the first and the second lower frame side sections, with the seat bottom being supported by the lower cross bar.

The seat structure may have a rigid base structure covering a back side of the seat back and the seat bottom respectively. The seat structure may for example have a rigid plastic base structure completely covering the back side of the seat back and the seat bottom. By back side is herein meant the side not intended to face the user sitting in the seat structure.

### BRIEF DESCRIPTION OF THE DRAWINGS

The present invention will be further explained hereinafter by means of non-limiting examples and with reference to the appended drawings wherein:
- Fig. 1a-1c: illustrate perspective views of a bike trailer according to the present disclosure with a seat structure being connected to the bike trailer in alternative positions;
- Fig. 2a-2b: illustrate a portion of a bike trailer and seat back comprising a reclining member according to the present disclosure;
- Fig. 3: illustrates a cross sectional view of a lower frame portion and a seat structure of the bike trailer according to Fig. 1a;
- Fig, 4a: illustrates a perspective view of the bike trailer according to Fig. 1a with the seat backs being positioned in upright positions; and
- Fig, 4b: illustrates a perspective view if the bike trailer in Fig. 4a with one seat back having been repositioned into a reclined position and one seat back remaining in the upright position.

### DETAILED DESCRIPTION

It is to be understood that the drawings are schematic and that individual components are not necessarily drawn to scale. The bike trailer including the main frame, seat structure and reclining member shown in the figures are provided as examples only and should not be considered limiting to the invention. Accordingly, the scope of the invention is determined solely by the appended claims.

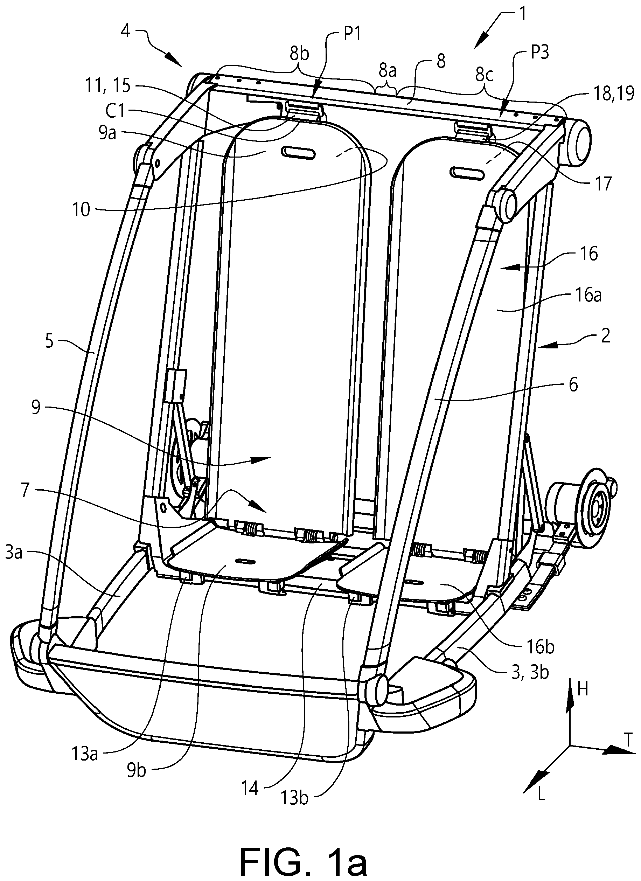

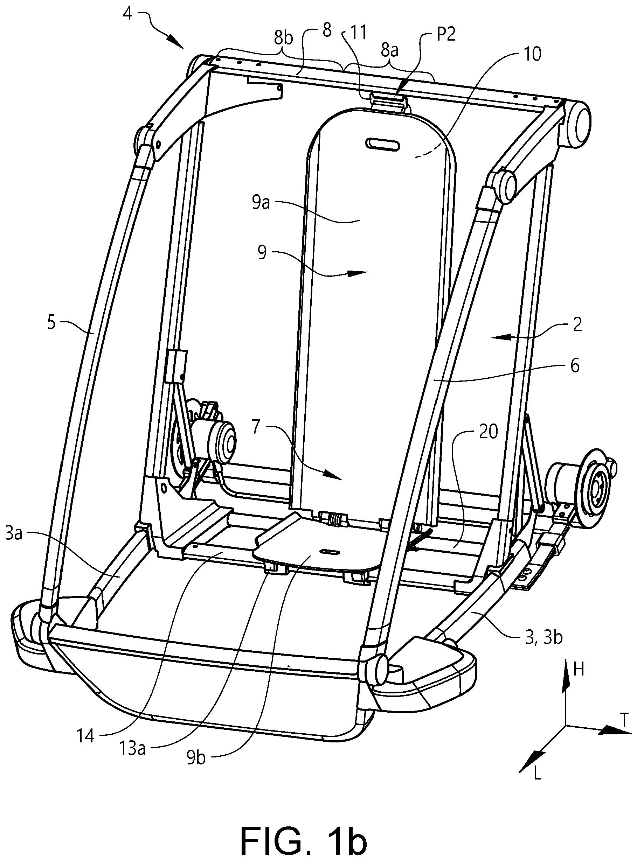

Fig. 1a shows a bike trailer 1 according to the present disclosure. The bike trailer 1 comprises a main frame 2 comprising a lower frame portion 3, a rear frame portion 4 and two side frame portions 5,6 provided on opposite lateral sides of the lower frame portion 3. The main frame 2 defines an accommodation space 7 for a passenger. The bike trailer 1 has an extension in a longitudinal direction L, corresponding to the travel direction of the bike trailer when being in use, in a transverse direction T and in a height direction H. The rear frame portion 4 comprises an upper cross bar 8 having a central portion 8a and first and second lateral portions 8b,8c provided on opposite sides of the central portion 8a of the cross bar 8, as seen in the transverse direction T. The bike trailer 1 comprises a seat structure 9 forming a seating area for the passenger, the seat structure 9 comprising a seat back 9a and a seat bottom 9b. The cross bar 8 comprises a connecting member 11 and the seat back 9a is releasably connected to the upper cross bar 8 via the connecting member 11 at an upper end section 10 of the seat back 9a. The seat back 9a is configured for releasable connection to the upper cross bar 8 in a first position P1 and in a second position P2 (shown in Fig. 1b).

The bike trailer 1 furthermore comprises a second seat structure 16 forming a second seating area for a second passenger. The second seat structure 16 comprises a second seat back 16a and a second seat bottom 16b. The second seat structure 16 is releasably connected to the second lateral portion 8c of the cross bar 8 in a third position P3 forming a second lateral seating area for a second passenger. The upper cross bar 8 comprises a second connecting member 18 configured for the releasable connection between the second seat back 16a and the upper cross bar 8.

The lower frame portion 3 of the main frame 2 comprises a first and a second lower frame side sections 3a,3b and a lower cross bar 14 extends between the first and the second lower frame side sections 3a,3b supporting the seat bottom 9b. The seat bottom 9b is in Fig. 1a releasably connected to the lower frame portion 3. The bike trailer 1 comprises a first and a second locking member 13a, 13b. The first locking member 13a locks the position of the seat structure 9 in the first position P1 and the second locking member 13b locks the second seat structure 16 in the third position P3. When the seat structures 9,16 are in the respective first and second locked positions, movement of the seat structures are prevented.

The connecting member 11 and the second connecting member 18 furthermore each has the function of a respective reclining member 15,19. The seat back 9a and the second seat back 16a are configured for moving between an upright position and a reclined position, shown in Figs, 4a and 4b. The reclining members 15,19 are transferable between a first configuration C1 wherein the respective seat back 9a,16a is in the upright position and a second configuration C2 wherein the respective seat backs 9a,16a are in the reclined position. The positioning of the respective seat backs 9a, 16a are independent from each other, meaning that the seat back 9a may be in the upright position when the second seat back 16b is in the reclined position and vice versa.

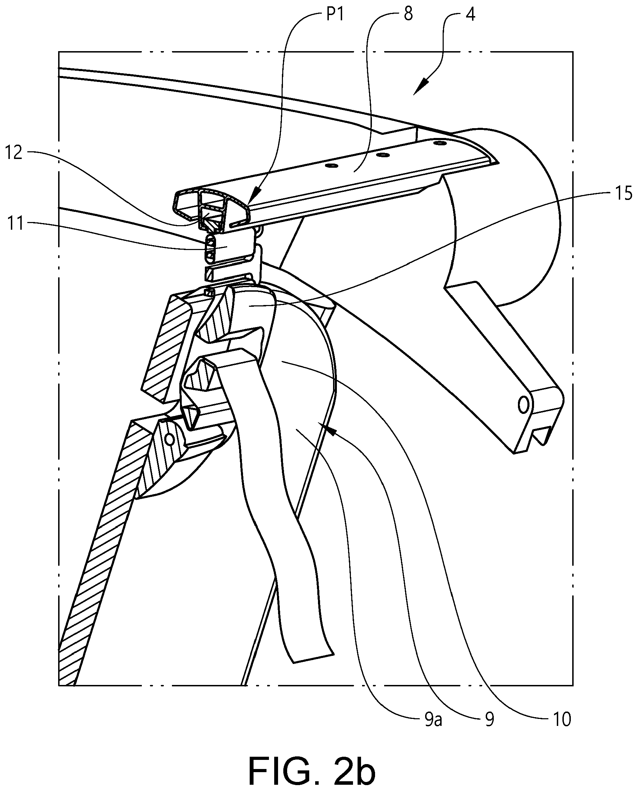

Fig. 1b illustrates the bike trailer 1 from Fig. 1a after the second seat structure 16 has been disconnected from the first lateral portion 8a of the cross bar 8 and removed from the bike trailer 1 and after the seat back 9a of the seat structure 9 has been disconnected from the first position P1 and transferred to the second position P2. The second position P2 is arranged on the central portion 8a of the upper cross bar 8 and when the seat structure 9 is arranged in the second position P2, a centralized seating area for the passenger is provided. The seat structure 9 may be transferred from the first position P1 to the second position P2 by unlocking the locking member 13a, in these Figs. provided on a releasable connection between the seat bottom 9b and the lower cross bar 14, and by sliding the seat bottom 9b over the lower cross bar 14, and over a rear lower cross bar 20 provided for supporting the seat bottom 9b and by sliding the seat back 9a in a track (shown in Fig. 2b) provided in the cross bar 8. Since the seat structure 9 is still connected to the main frame 2 while transferring the seat structure 9 between the first position P1 and second position P2, no cumbersome removal and repositioning of the seat structure 9 is needed.

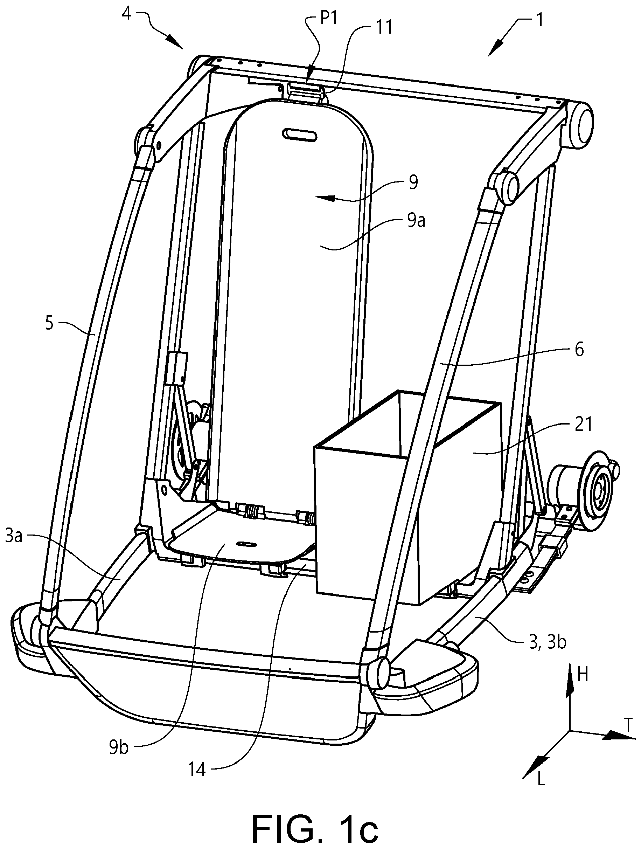

Fig. 1c illustrates the bike trailer 1 from Figs. 1a and 1b, when the seat structure 9 is connected to the cross bar 8 in the first position P1 and the first lateral seating area is provided. In the space providing a second lateral seating area in Fig. 1a, a luggage 21 is instead accommodated and releasably connected to the lower cross bar 14 and to the rear lower cross bar 20 (not shown).

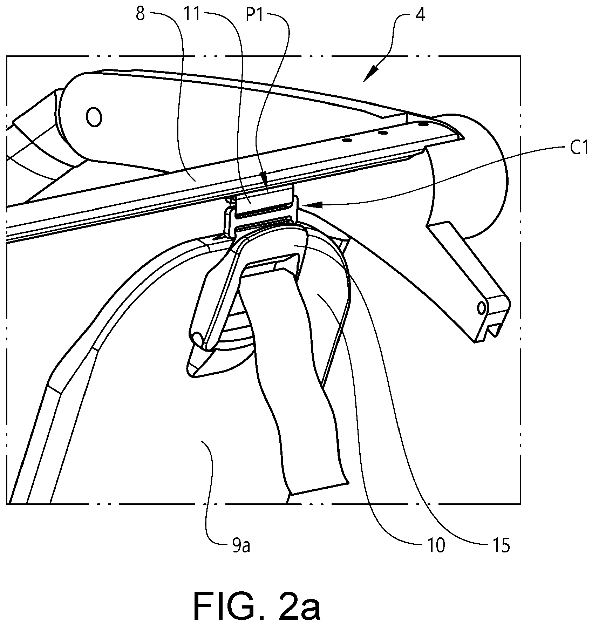

Fig. 2a illustrates the connection between the seat structure 9 and the cross bar 8 from Fig. 1a. The upper end section 10 of the seat back 9a comprises a connecting member 11 which is releasably connected to the upper cross bar 8. The connection member 11 has in this embodiment also the function of a reclining member 15. The reclining member 15 is in this illustration a strap member. The seat back 9a is in Fig. 2a shown in an upright position which may upon release of the strap provide the seat back 9a in a reclined position. Fig. 2b is a cross sectional view, illustrating the connection of the seat structure 9 to the cross bar 8 shown in Fig. 2a. As may be seen in Fig. 2a, the cross bar 8 extending from the side frame portion 5 is provided with a track 12 on a downward side facing the seat structure 9. The connecting member 11 may be transferable from the first position P1 to the second position P2 (shown in Fig. 1b) by sliding in the track 12 in the upper cross bar 8. The connecting member 11 is attached to the upper end section 10 of the seat back 9a and is a strap connected to a hook member sliding in the cross bar 8.

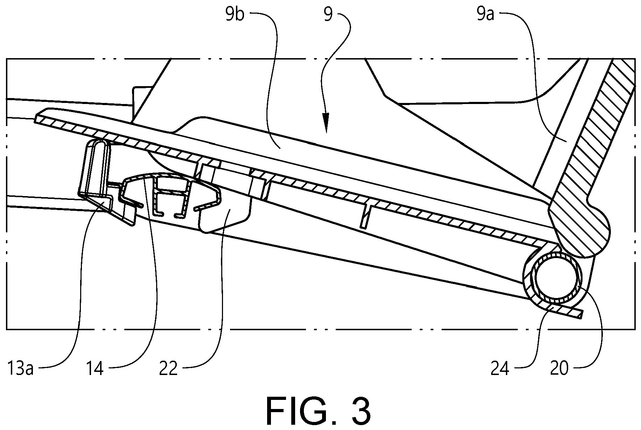

Fig. 3 illustrates a cross sectional view of a part of the seat structure 9, comprising the seat back 9a and the seat bottom 9b, the lower cross bar 14 and the rear lower cross bar 20 supporting the seat bottom 9b. The seat bottom 9b is releasably connected to the lower cross bar 14 by a seat bottom connecting member 22 and to the rear lower cross bar 20 by a seat bottom rear connecting member 24, configured to enable a sliding transfer of the seat bottom 9b over the lower cross bar 14 and over the rear lower cross bar 20. The seat bottom connecting member 22 comprises the first locking member 13a preventing movement of the seat structure 9 in the transverse direction T (shown in Fig. 1a) upon locking of the first locking member 13a.

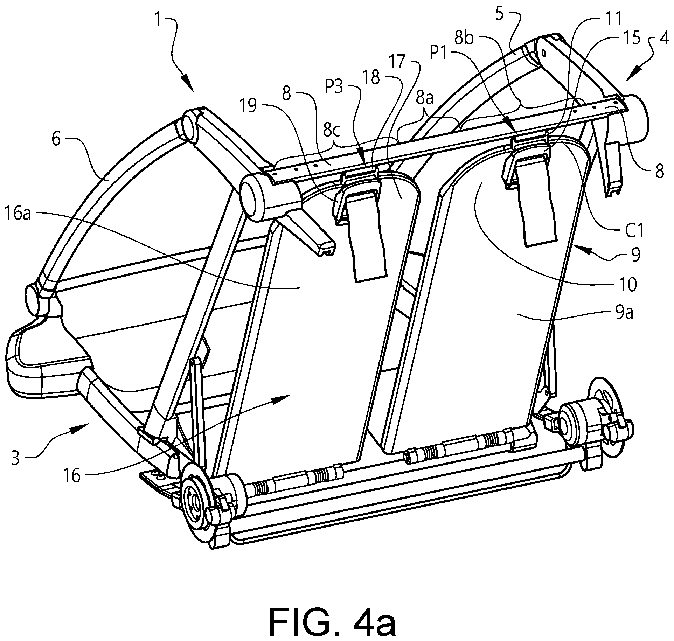

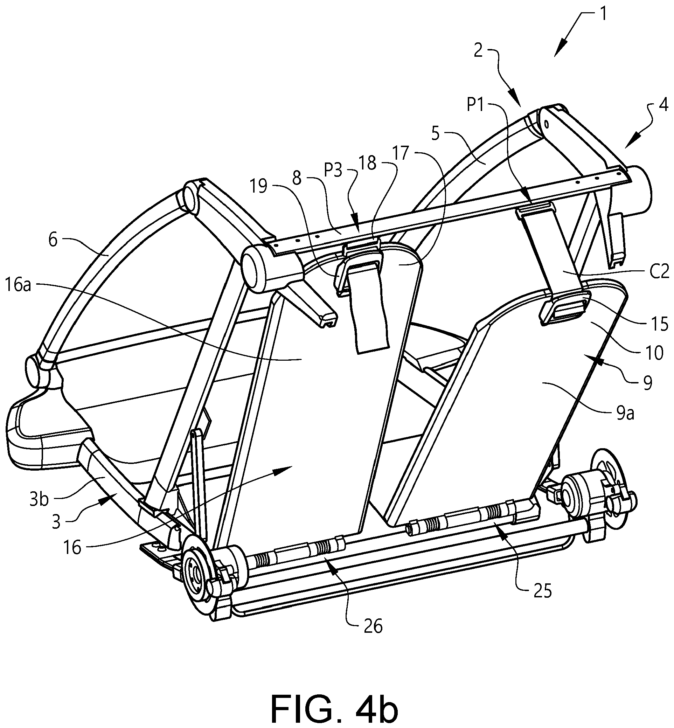

Figs. 4a and 4b illustrate a perspective view of the bike trailer from Fig. 1a as shown from a rear side of the bike trailer 1. The bike trailer 1 comprises the main frame 2 comprising the lower frame portion 3, the rear frame portion 4 and the two side frame portions 5,6 provided on opposite lateral sides of the lower frame portion 3. The rear frame portion 4 comprises the upper cross bar 8 having the central portion 8a (shown in Fig. 1b) and the first and second lateral portions 8b,8c provided on opposite sides of the central portion 8a of the cross bar 8. The bike trailer 1 comprises the seat structure 9 forming the seating area for the passenger. The bike trailer furthermore comprises the second seat structure 16 forming the second seating area for a second passenger. The seat back 9a of the seat structure 9 is releasably connected to the upper cross bar 8 via the connecting member 11 arranged at the upper end section 10 of the seat back 9a. The seat back 9a is connected to the first lateral portion 8b in the first position P1 thus forming the first lateral seating area. The second seat back 16a of the second seat structure 16 is releasably connected to the upper cross bar 8 via the second connecting member 18 arranged at the upper end section 17 of the second seat back 16a. The second seat back 16a is connected to the second lateral portion 8c of the upper cross bar 8 in the third position P3 thus forming the second lateral seating area. The second connecting member 18 is in the form of a strap also having the function of the reclining member 19.

The seat back 9a and the second seat back 16a are configured for moving between an upright position and a reclined position. The reclining members 15,19 are transferable between the first configuration C1, as illustrated in Fig. 4a, wherein the respective seat back 9a, 16a is in the upright position and a second configuration C2 (not shown) wherein the respective seat backs 9a,16a are in the reclined position. Fig. 4b illustrates when the seat back 9a has been moved to the reclined position by releasing the strap 15 and providing the reclining member 15 in the second configuration C2 in which the upper end section 10 is provided at a greater distance to the cross bar 8 compared to when the reclining member 15 is in the first configuration C1. As shown in Fig. 4b, the positioning of the respective seat backs 9a, 16a are independent from each other, meaning that the seat back 9a may be in the upright position when the second seat back 16b is in the reclined position and vice versa.

The seat back 9a is hingedly connected to the seat bottom 9b and wherein the seat structure 9 is provided with a first spring-biased member 25, such as a torsion spring, which biases the seat back 9a towards the reclined position. The second seat back 16a is also hingedly connected to the second seat bottom 16b and the second seat structure 16 is provided with a second spring-biased member 26, such as a torsion spring, which biases the second seat back 16a towards the reclined position. This facilitates moving the seat back from the upright to the reclined position.

## Claims

1. A bike trailer (1) comprising a main frame (2) comprising a lower frame portion (3), a rear frame portion (4) and two side frame portions (5,6) provided on opposite lateral sides of the lower frame portion (3), the main frame (2) defining an accommodation space (7) for a passenger, wherein the bike trailer (1) has an extension in a longitudinal direction (L), in a transverse direction (T) and in a height direction (H), the bike trailer (1) comprising a seat structure (9) forming a seating area for the passenger, the seat structure (9) comprising a seat back (9a) and a seat bottom (9b), wherein the seat back (9a) is configured for releasable connection to the bike trailer (1) in a first position (P1) and in a second position (P2), the first position (P1) providing a first lateral seating area for the passenger, and the second position (P2) providing a centralized seating area for the passenger, as seen in the transverse direction (T), **characterized in that** the rear frame portion (4) comprises an upper cross bar (8) having a central portion (8a) and first and second lateral portions (8b,8c) provided on opposite sides of the central portion (8a), as seen in the transverse direction (T), wherein the seat back (9a) is releasably connected to the upper cross bar (8) at an upper end section (10) of the seat back (9a), and wherein the seat back (9a) is configured for releasable connection to the upper cross bar (8) in the first position (P1) and in the second position (P2), the first position (P1) being arranged on the first lateral portion (8b) of the cross bar (8), thus forming the first lateral seating area for the passenger, and the second position (P2) being arranged on the central portion (8a) of the upper cross bar (8), thus forming the centralized seating area for the passenger.

2. The bike trailer (1) according to claim 1, wherein the seat back (9a) and/or the upper cross bar (8) comprises a connecting member (11) configured for releasable connection between the seat back (9a) and the upper cross bar (8) and wherein the connecting member (11) is transferable by sliding in or on the upper cross bar (8), such as in a track (12) provided in the upper cross bar (8), between the first position (P1) and the second position (P2).

3. The bike trailer (1) according to any one of the preceding claims, wherein the seat back (9a) and the seat bottom (9b) are one integrated unit.

4. The bike trailer (1) according to claim 1, wherein the seat bottom (9b) extends, as seen in the transverse direction (T), over the first lateral seating area and over the centralized seating area for the passenger and the seat back (9a) is releasably connected to the seat bottom (9b) in the first position (P1) and in the second position (P2).

5. The bike trailer (1) according to any one of the preceding claims, wherein the bike trailer (1) comprises a first and/or a second locking member (13a,13b) and the first and second positions (P1,P2) are first and second locked positions preventing movement of the seat structure (9) in the transverse direction (T) upon locking of the first and/or second locking member (13a, 13b).

6. The bike trailer (1) according to any one of claims 1 - 5, wherein the lower frame portion (3) comprises a first and a second lower frame side sections (3a,3b) and wherein a lower cross bar (14) extends between the first and the second lower frame side sections (3a,3b), the seat bottom (9b) being supported by the lower cross bar (14).

7. The bike trailer (1) according to any one of the preceding claims, wherein the seat structure (9) has a rigid base structure covering a back side of the seat back (9a) and the seat bottom (9b) respectively.

8. The bike trailer (1) according to any one of the preceding claims, wherein the bike trailer (1) comprises a second seat structure (16) forming a seating area for a second passenger, the second seat structure (16) comprising a seat back (16a) and a seat bottom (16b), wherein the seat back (16a) of the second seat structure (16) is releasably connected to the bike trailer (1) in a third position (P3) providing a second lateral seating area for the second passenger.

9. The bike trailer (1) according to claim 8, wherein the seat back (9a) and the seat bottom (9b) of the second seat structure are one integrated unit.

## Patentansprüche

1. Fahrradanhänger (1), umfassend einen Hauptrahmen (2), umfassend einen unteren Rahmenabschnitt (3), einen hinteren Rahmenabschnitt (4) und zwei seitliche Rahmenabschnitte (5,6), die an gegenüberliegenden lateralen Seiten des unteren Rahmenabschnitts (3) bereitgestellt sind, wobei der Hauptrahmen (2) einen Unterbringungsraum (7) für einen Passagier definiert, wobei der Fahrradanhänger (1) eine Erstreckung in einer Längsrichtung (L), in einer Querrichtung (T) und in einer Höhenrichtung (H) aufweist, der Fahrradanhänger (1) umfassend eine Sitzstruktur (9), die einen Sitzbereich für den Passagier ausbildet, die Sitzstruktur (9) umfassend eine Sitzlehne (9a) und eine Sitzfläche (9b), wobei die Sitzlehne (9a) für eine lösbare Verbindung mit dem Fahrradanhänger (1) in einer ersten Position (P1) und in einer zweiten Position (P2) konfiguriert ist, wobei die erste Position (P1) einen ersten lateralen Sitzbereich für den Passagier bereitstellt und die zweite Position (P2) einen zentralisierten Sitzbereich für den Passagier bereitstellt, wie in der Querrichtung (T) gesehen, **dadurch gekennzeichnet, dass** der hintere Rahmenabschnitt (4) eine obere Querstange (8) umfasst, die einen zentralen Abschnitt (8a) und erste und zweite seitliche Abschnitte (8b,8c) aufweist, die auf gegenüberliegenden Seiten des zentralen Abschnitts (8a) bereitgestellt sind, wie in der Querrichtung (T) gesehen, wobei die Sitzlehne (9a) mit der oberen Querstange (8) an einer oberen Endregion (10) der Sitzlehne (9a) lösbar verbunden ist, und wobei die Sitzlehne (9a) für eine lösbare Verbindung mit der oberen Querstange (8) in der ersten Position (P1) und in der zweiten Position (P2) konfiguriert ist, wobei die erste Position (P1) an dem ersten lateralen Abschnitt (8b) der Querstange (8) angeordnet ist und somit den ersten lateralen Sitzbereich für den Passagier ausbildet, und die zweite Position (P2) an dem zentralen Abschnitt (8a) der oberen Querstange (8) angeordnet ist und somit den zentralisierten Sitzbereich für den Passagier ausbildet.

2. Fahrradanhänger (1) nach Anspruch 1, wobei die Sitzlehne (9a) und/oder die obere Querstange (8) ein Verbindungselement (11) umfasst, das für eine lösbare Verbindung zwischen der Sitzlehne (9a) und der oberen Querstange (8) konfiguriert ist, und wobei das Verbindungselement (11) durch ein Gleiten in oder auf der oberen Querstange (8), wie in einer Schiene (12), die in der oberen Querstange (8) bereitgestellt ist, zwischen der ersten Position (P1) und der zweiten Position (P2) überführbar ist.

3. Fahrradanhänger (1) nach einem der vorstehenden Ansprüche, wobei die Sitzlehne (9a) und die Sitzfläche (9b) eine integrierte Einheit sind.

4. Fahrradanhänger (1) nach Anspruch 1, wobei sich die Sitzfläche (9b), wie in der Querrichtung (T) gesehen, über den ersten lateralen Sitzbereich und über den zentralisierten Sitzbereich für den Passagier erstreckt und die Sitzlehne (9a) in der ersten Position (P1) und in der zweiten Position (P2) lösbar mit der Sitzfläche (9b) verbunden ist.

5. Fahrradanhänger (1) nach einem der vorstehenden Ansprüche, wobei der Fahrradanhänger (1) ein erstes und/oder ein zweites Verriegelungselement (13a, 13b) umfasst und die erste und die zweite Position (P1,P2) erste und zweite verriegelte Positionen sind, die eine Bewegung der Sitzstruktur (9) in der Querrichtung (T) bei dem Verriegeln des ersten und/oder zweiten Verriegelungselements (13a, 13b) verhindern.

6. Fahrradanhänger (1) nach einem der Ansprüche 1 bis 5, wobei der untere Rahmenabschnitt (3) eine erste und eine zweite untere Rahmenseitenregion (3a,3b) umfasst und wobei sich eine untere Querstange (14) zwischen der ersten und der zweiten unteren Rahmenseitenregion (3a,3b) erstreckt, wobei die Sitzfläche (9b) durch die untere Querstange (14) gestützt wird.

7. Fahrradanhänger (1) nach einem der vorstehenden Ansprüche, wobei die Sitzstruktur (9) eine starre Basisstruktur aufweist, die eine Rückseite der Sitzlehne (9a) beziehungsweise der Sitzfläche (9b) abdeckt.

8. Fahrradanhänger (1) nach einem der vorstehenden Ansprüche, wobei der Fahrradanhänger (1) eine zweite Sitzstruktur (16) umfasst, die einen Sitzbereich für einen zweiten Passagier ausbildet, die zweite Sitzstruktur (16) umfassend eine Sitzlehne (16a) und eine Sitzfläche (16b), wobei die Sitzlehne (16a) der zweiten Sitzstruktur (16) in einer dritten Position (P3) lösbar mit dem Fahrradanhänger (1) verbunden ist, wobei ein zweiter lateraler Sitzbereich für den zweiten Passagier bereitstellt wird.

9. Fahrradanhänger (1) nach Anspruch 8,
wobei die Sitzlehne (9a) und die Sitzfläche (9b) der zweiten Sitzstruktur eine integrierte Einheit sind.

## Revendications

1. Remorque pour vélo (1) comprenant un cadre principal (2) comprenant une partie inférieure de cadre (3), une partie arrière de cadre (4) et deux parties latérales de cadre (5, 6) fournies sur des côtés latéraux opposés de la partie inférieure de cadre (3), le cadre principal (2) définissant un espace d'accueil (7) pour un passager, dans laquelle la remorque pour vélo (1) a une extension dans une direction longitudinale (L), dans une direction transversale (T) et dans une direction de hauteur (H), la remorque pour vélo (1) comprenant une structure de siège (9) formant une zone de siège pour le passager, la structure de siège (9) comprenant un dossier de siège (9a) et une assise de siège (9b), dans laquelle le dossier de siège (9a) est conçu pour une liaison amovible à la remorque pour vélo (1) dans une première position (P1) et dans une deuxième position (P2), la première position (P1) fournissant une première zone de siège latérale pour le passager et la deuxième position (P2) fournissant une zone de siège centralisée pour le passager, vue dans la direction transversale (T), **caractérisée en ce que** la partie arrière de cadre (4) comprend une traverse supérieure (8) ayant une partie centrale (8a) et une première et une seconde partie latérale (8b, 8c) fournies sur des côtés opposés de la partie centrale (8a), vues dans la direction transversale (T), dans laquelle le dossier de siège (9a) est relié de manière amovible à la traverse supérieure (8) au niveau d'une section d'extrémité supérieure (10) du dossier de siège (9a), et dans laquelle le dossier de siège (9a) est conçu pour une liaison amovible à la traverse supérieure (8) dans la première position (P1) et dans la deuxième position (P2), la première position (P1) étant disposée sur la première partie latérale (8b) de la traverse (8), formant ainsi la première zone de siège latérale pour le passager, et la deuxième position (P2) étant disposée sur la partie centrale (8a) de la traverse supérieure (8), formant ainsi la zone de siège centralisée pour le passager.

2. Remorque pour vélo (1) selon la revendication 1, dans laquelle le dossier de siège (9a) et/ou la traverse supérieure (8) comprennent un élément de liaison (11) conçu pour une liaison amovible entre le dossier de siège (9a) et la traverse supérieure (8) et dans laquelle l'élément de liaison (11) est transférable par glissement dans ou sur la traverse supérieure (8), par exemple dans un rail (12) fourni dans la traverse supérieure (8), entre la première position (P1) et la deuxième position (P2).

3. Remorque pour vélo (1) selon l'une quelconque des revendications précédentes, dans laquelle le dossier de siège (9a) et l'assise de siège (9b) sont une unité intégrée.

4. Remorque pour vélo (1) selon la revendication 1, dans laquelle l'assise de siège (9b) s'étend, vue dans la direction transversale (T), au-dessus de la première zone de siège latérale et au-dessus de la zone de siège centralisée pour le passager, et le dossier de siège (9a) est relié de manière amovible à l'assise de siège (9b) dans la première position (P1) et dans la deuxième position (P2).

5. Remorque pour vélo (1) selon l'une quelconque des revendications précédentes, dans laquelle la remorque pour vélo (1) comprend un premier et/ou un second élément de verrouillage (13a, 13b) et la première et la deuxième position (P1, P2) sont la première et la seconde position verrouillée empêchant un mouvement de la structure de siège (9) dans la direction transversale (T) lors du verrouillage du premier et/ou du second élément de verrouillage (13a, 13b).

6. Remorque pour vélo (1) selon l'une quelconque des revendications 1 à 5, dans laquelle la partie inférieure de cadre (3) comprend une première et une seconde section latérale inférieure de cadre (3a, 3b) et dans laquelle une traverse inférieure (14) s'étend entre la première et la seconde section latérale inférieure de cadre (3a, 3b), l'assise de siège (9b) étant supportée par la traverse inférieure (14).

7. Remorque pour vélo (1) selon l'une quelconque des revendications précédentes, dans laquelle la structure de siège (9) a une structure de base rigide couvrant respectivement un côté arrière du dossier de siège (9a) et de l'assise de siège (9b).

8. Remorque pour vélo (1) selon l'une quelconque des revendications précédentes, dans laquelle la remorque pour vélo (1) comprend une seconde structure de siège (16) formant une zone de siège pour un second passager, la seconde structure de siège (16) comprenant un dossier de siège (16a) et une assise de siège (16b), dans laquelle le dossier de siège (16a) de la seconde structure de siège (16) est relié de manière amovible à la remorque pour vélo (1) dans une troisième position (P3) fournissant une seconde zone de siège latérale pour le second passager.

9. Remorque pour vélo (1) selon la revendication 8,
dans laquelle le dossier de siège (9a) et l'assise de siège (9b) de la seconde structure de siège sont une unité intégrée.
